# DEMANDE DE BREVET EUROPEEN

(11) **EP 4 340 217 A1**
(43) Date de publication de la demande: **20.03.2024**
(21) Numéro de dépôt: 23196468.5
(22) Date de dépôt: 11.09.2023
(51) Int. Cl.: H02S 50/10, H02S 50/15

(54) **DISPOSITIF DE SIMULATION D OMBRAGE SUR UN PANNEAU PHOTOVOLTAÏQUE**

(30) Priorité: 13.09.2022 FR 2209207
(71) Demandeur: Commissariat à l'Énergie Atomique et aux Énergies Alternatives, 75015 Paris (FR)
(72) Inventeur: RADDENZATI, Aurélien, 38054 GRENOBLE (FR); DERBALI, Imed, 38054 GRENOBLE (TN)
(74) Mandataire: Brevalex

(57) **Abrégé**

Dispositif de simulation d'ombrage (100) sur un panneau photovoltaïque (200), comprenant :
- un support (102) du panneau ;
- un dispositif de projection d'ombre (104) disposé en regard du panneau, comprenant :
∘ une face d'entrée recevant une lumière incidente ;
∘ un polariseur polarisant la lumière selon une première direction ;
∘ un élément matriciel de polarisation (112) recevant la lumière polarisée selon la première direction et modifiant la direction de polarisation de la lumière sortant de différentes régions de l'élément indépendamment les unes des autres;
∘ un analyseur recevant la lumière sortant des différentes régions de l'élément et la filtrant selon une deuxième direction perpendiculaire à la première, de manière à délivrer une image lumineuse incluant l'ombre destinée à être projetée ;
∘ un dispositif électronique de commande (118) de l'élément matriciel de polarisation.

## Description

### DOMAINE TECHNIQUE

L'invention concerne le domaine de la simulation d'ombrage sur les panneaux photovoltaïques, dans le but de caractériser électriquement ces panneaux dans une telle configuration.

### État de la technique antérieure

L'étude de l'ombrage partiel des panneaux photovoltaïques est un enjeu important dans la conception d'architecture de ces panneaux. En effet, lorsqu'une ombre est projetée sur une partie d'un panneau photovoltaïque, la ou les cellules photovoltaïques de ce panneau se trouvant dans cette ombre limitent le courant de sortie de l'intégralité de la chaîne de cellules du panneau à laquelle elle appartient, en plus d'être sujet à une dégradation rapide liée à une forte polarisation inverse à leurs bornes. L'ombrage partiel d'une cellule génère également un échauffement localisé sur cette cellule, appelé « hotspot », qui est aussi responsable d'une dégradation de la cellule. Une protection par diode « bypass » ou par des architectures d'interconnexions particulières sont donc nécessaires afin d'éviter un vieillissement trop rapide des cellules.

Les motifs d'ombrage partiel utilisés dépendent de l'application à laquelle est intégré le module photovoltaïque. Différents scenarii sont à tester expérimentalement afin de vérifier la robustesse de l'architecture du module selon une exposition à de l'ombrage partiel, et établir un protocole de vieillissement sous ombrage.

Un premier moyen pour simuler un ombrage partiel d'un panneau photovoltaïque consiste à utiliser un cache opaque de taille variable posé directement sur le panneau à étudier, et le déplacer manuellement. Cette méthode présente l'avantage de couper totalement la lumière incidente au niveau des cellules masquées par le cache, mais ne permet pas de réaliser des motifs d'ombrage projetés de manière dynamique, c'est-à-dire se déplaçant sur le panneau et/ou changeant de forme et/ou d'opacité. Une intervention manuelle d'un opérateur est donc nécessaire pour toute modification du protocole.

Il existe également des systèmes utilisant des bâches déroulantes directement posées sur le panneau. Avec de tels systèmes, le nombre et la complexité des motifs d'ombrage possibles sont toutefois très limités.

Le document de H. Ziar et al., "Quantification of Shading Tolerability for Photovoltaic Modules," in IEEE Journal of Photovoltaics, vol. 7, no. 5, pp. 1390-1399,

Sept. 2017, décrit un équipement d'ombrage partiel d'un panneau photovoltaïque utilisant des caches opaques afin de créer différents motifs d'ombrage. La complexité des motifs d'ombrage réalisables avec un tel équipement est toutefois très limitée.

Un deuxième moyen pour réduire l'intensité lumineuse incidente sur un panneau photovoltaïque consiste à directement faire varier la puissance des lampes situées au-dessus du module à étudier, comme décrit dans le document M. A. AI Mamun et al., « Experimental investigation of the effect of partial shading on photovoltaic performance », Juin 2017, Renewable Power Génération, lET Volume 11(Issue 7), p. 912 - 921. En jouant sur la puissance électrique envoyée à une partie des lampes, il est possible d'observer des effets d'ombrage sur les cellules. Le principal désavantage de cette technique est l'incapacité d'obtenir un noir total sur une partie du module photovoltaïque compte tenu de la propagation des faisceaux lumineux et de la diffusion latérale de la lumière en provenance des lampes. Il en découle une gestion peu précise des motifs d'ombrage réalisés.

### EXPOSÉ DE L'INVENTION

Un but de la présente invention est de proposer un dispositif de simulation d'ombrage sur au moins un panneau photovoltaïque ne présentant pas les inconvénients des dispositifs existants décrits ci-dessus.

Pour cela, l'invention propose un dispositif de simulation d'ombrage sur au moins un panneau photovoltaïque, comprenant au moins :
- un premier support configuré pour supporter le panneau photovoltaïque ;
- un dispositif de projection d'ombre configuré pour être disposé en regard du panneau photovoltaïque, comprenant au moins :
   ∘ une face d'entrée destinée à recevoir une lumière incidente ;
   ∘ un polariseur configuré pour polariser la lumière incidente selon une première direction de polarisation ;
   ∘ un élément matriciel de polarisation configuré pour recevoir la lumière incidente polarisée selon la première direction de polarisation et modifier, en fonction d'un signal de commande représentatif d'un motif de l'ombre destinée à être projetée, la direction de polarisation de la lumière sortant de différentes régions de l'élément matriciel de polarisation indépendamment les unes des autres ;
   ∘ un analyseur configuré pour recevoir la lumière sortant des différentes régions de l'élément matriciel de polarisation et la filtrer selon une deuxième direction de polarisation perpendiculaire à la première direction de polarisation, de manière à délivrer, sur une face de sortie destinée à être disposée en regard du panneau photovoltaïque, une image lumineuse incluant l'ombre destinée à être projetée ;
   ∘ un dispositif électronique de commande couplé électriquement à l'élément matriciel de polarisation et configuré pour envoyer le signal de commande à l'élément matriciel de polarisation.

Ce dispositif permet de simuler un ombrage partiel sur un panneau photovoltaïque, comprenant une ou plusieurs cellules photovoltaïques, et de projeter différents scénarii d'ombrage de manière statique ou en dynamique sans modifier la source lumineuse incidente.

Ce dispositif fait appel aux propriétés de polarisation de la lumière et propose de former une ombre en bloquant une partie de la lumière, en jouant sur la polarisation de celle-ci et ainsi projeter une ombre sur le panneau photovoltaïque. Cette technique permet la réalisation de motifs d'ombrage pouvant être bien plus complexes que ceux réalisables avec des caches opaques, tout en simplifiant la réalisation de ces motifs étant donné qu'il n'est pas nécessaire de déplacer physiquement des caches opaques.

Un autre avantage lié à l'utilisation des propriétés de polarisation de la lumière est que les motifs d'ombrage réalisés sont bien plus précis que ceux obtenus lorsqu'une partie des lampes projetant la lumière incidente sont éteintes pour former une ombre sur le panneau photovoltaïque.

L'invention permet de générer un ombrage partiel d'au moins un panneau photovoltaïque par une méthode non destructrice sur le panneau photovoltaïque. L'invention permet d'appliquer sur au moins un panneau photovoltaïque un motif d'ombrage statique ou dynamique, et éventuellement de manière aléatoire selon l'application demandée.

L'invention ne demande pas de modification de la source lumineuse incidente, celle-ci pouvant correspondre à la lumière du soleil lorsque le dispositif est utilisé en extérieur. Le spectre lumineux arrivant sur le panneau photovoltaïque est toutefois différent de celui émis par la source lumineuse compte tenu de l'absorption spectrale par le dispositif de projection d'ombre, ce qui change la puissance reçue sur le panneau photovoltaïque.

Le dispositif selon l'invention est facilement transportable et son installation est aisée. Selon une réalisation avantageuse, l'élément matriciel de polarisation peut comporter une couche de cristaux liquides couplée à une matrice électronique de commande. Dans ce cas, ce sont les cristaux liquides, dont l'orientation est commandable électriquement, qui assurent la modification de la polarisation de la lumière traversant l'élément matriciel de polarisation. De plus, l'élément matriciel de polarisation peut dans ce cas correspondre à une matrice LCD, ou dalle LCD, similaire à celles utilisées dans des écrans LCD.

La matrice électronique de commande peut correspondre à une matrice active de transistors. Dans ce cas, la commande de chacune des régions de l'élément matriciel de polarisation est assurée par un transistor, par exemple de type TFT (« Thin Film Transistor » en anglais, ou transistor en couches minces). En variante, la matrice électronique de commande peut correspondre à une matrice passive formée de grille de fils conducteurs.

Le polariseur, l'élément matriciel de polarisation et l'analyseur peuvent être configurés pour polariser la lumière dans l'ensemble d'une gamme de longueurs d'onde comprises entre 400 nm et 1100 nm. Ainsi, l'ombre simulée par le dispositif s'applique également à une partie de la lumière dans le domaine infrarouge. Dans cette configuration, le polariseur et l'analyseur peuvent être par exemple de type à grille métallique ou à base de polymère.

Le dispositif de simulation d'ombrage peut comporter en outre une source lumineuse configurée pour illuminer la face d'entrée du dispositif de projection d'ombre. De manière avantageuse, la source lumineuse peut être configurée pour émettre une lumière conforme au spectre solaire AM 1.5 et/ou avec une puissance de 1000 W/m².

Le dispositif de simulation d'ombrage peut comporter en outre un deuxième support configuré pour supporter le dispositif de projection d'ombre.

Dans ce cas, le premier support et le deuxième support peuvent être configurés tels que la distance entre eux soit ajustable.

Le dispositif de simulation d'ombrage peut comporter en outre un dispositif de mesure courant - tension configuré pour mesurer la caractéristique courant - tension du panneau photovoltaïque.

L'invention concerne également un procédé de caractérisation d'au moins un panneau photovoltaïque, comportant au moins les étapes suivantes :
- disposer le panneau photovoltaïque sur le premier support d'un dispositif de simulation d'ombrage tel que décrit ci-dessus ;
- projection dynamique ou statique d'une image lumineuse incluant une ombre depuis le dispositif de projection d'ombre du dispositif de simulation d'ombrage sur le panneau photovoltaïque ;
- mesure de la caractéristique courant - tension du panneau photovoltaïque par le dispositif de mesure courant - tension du dispositif de simulation d'ombrage, simultanément à la projection de l'image lumineuse sur le panneau photovoltaïque.

Une projection de l'image lumineuse incluant l'ombre est qualifiée de statique lorsque l'intensité, la forme et la position de l'ombre ne changent pas en fonction du temps. Une projection de l'image lumineuse incluant l'ombre est qualifiée de dynamique lorsque l'intensité et/ou la forme et/ou la position de l'ombre change en fonction du temps lors de la projection sur le panneau photovoltaïque.

Dans l'ensemble du document, le terme « sur » est utilisé sans distinction de l'orientation dans l'espace de l'élément auquel se rapporte ce terme. Par exemple, dans la caractéristique « sur une face du premier substrat », cette face du premier substrat n'est pas nécessairement orientée vers le haut mais peut correspondre à une face orientée selon n'importe quelle direction. En outre, la disposition d'un premier élément sur un deuxième élément doit être comprise comme pouvant correspondre à la disposition du premier élément directement contre le deuxième élément, sans aucun élément intermédiaire entre les premier et deuxième éléments, ou bien comme pouvant correspondre à la disposition du premier élément sur le deuxième élément avec un ou plusieurs éléments intermédiaires disposés entre les premier et deuxième éléments.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
[Fig. 1], et
[Fig. 2] représentent schématiquement un dispositif de simulation d'ombrage, objet de la présente invention, selon un mode de réalisation particulier;
[Fig. 3] représente schématiquement une partie des éléments d'un dispositif de simulation d'ombrage, objet de la présente invention, selon un mode de réalisation particulier.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### Exposé détaillé de modes de réalisation particuliers

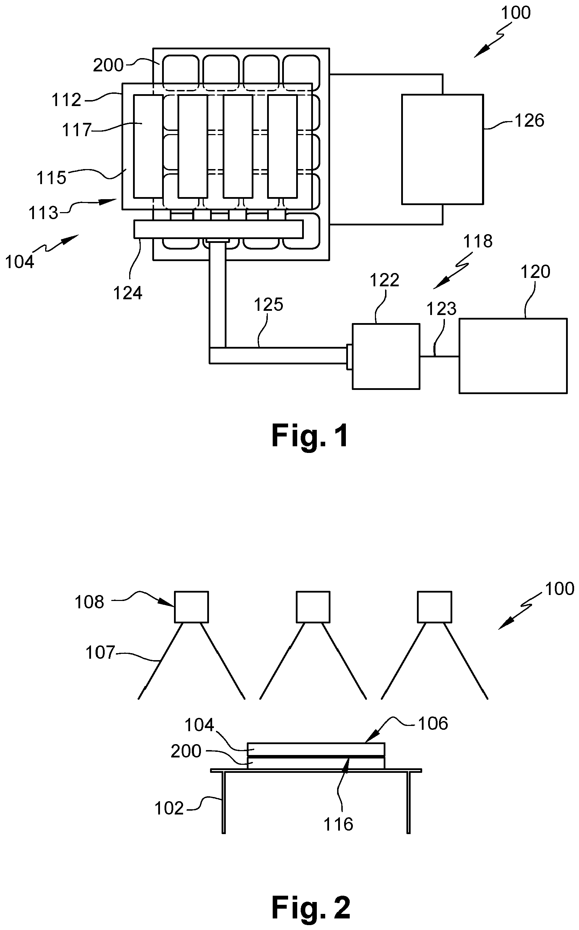

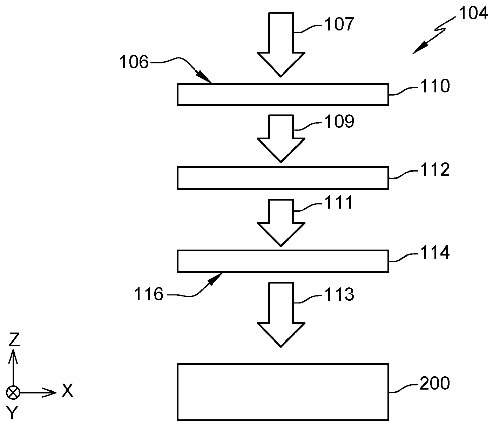

Un exemple de réalisation d'un dispositif 100 de simulation d'ombrage sur au moins un panneau, ou module, photovoltaïque 200 est décrit ci-dessous en lien avec les figures 1 et 2. Le dispositif 100 peut être utilisé pour tout type de panneau photovoltaïque 200, c'est-à-dire comportant une ou des cellules photovoltaïques à base de semi-conducteurs, de matériaux organiques, hybrides, etc.

Le dispositif 100 comporte un support 102 configuré pour supporter le panneau photovoltaïque 200. Sur l'exemple décrit ici, le support 102 correspond à une table stabilisée. Selon un autre exemple, notamment lorsque le dispositif 100 est utilisé dans un environnement extérieur, le support 102 peut correspondre à un châssis, mobile ou fixe, sur lequel un ou plusieurs panneaux photovoltaïques sont disposés. D'autres types de support 102 sont envisageables, que le dispositif 100 soit utilisé en extérieur ou en intérieur.

Le dispositif 100 comporte en outre un dispositif 104 de projection d'ombre configuré pour être disposé en regard du panneau photovoltaïque 200 lors d'une simulation d'ombrage sur ce panneau 200. Le dispositif 104 peut être supporté par un deuxième support, non visible sur les figures. Ce dispositif 104 est avantageusement agencé de manière à avoir un espace, entre le dispositif 104 et le panneau photovoltaïque 200, par exemple compris entre 1 cm et 10 cm, et ainsi permettre une circulation d'air entre le panneau 200 et le dispositif 104 pour éviter un échauffement trop important du dispositif 104 dû à l'absorption d'une partie du flux lumineux reçu. Cet espace peut être obtenu en ajustant la distance entre le support 102 et le deuxième support.

Le dispositif 104 comporte une face d'entrée 106 destinée à recevoir une lumière incidente 107. Dans une première configuration, cette lumière incidente 107 peut correspondre à la lumière provenant du soleil, notamment lorsque le dispositif 100 est utilisé dans un environnement extérieur. Dans une deuxième configuration telle que représentée sur la figure 2, le dispositif 100 peut comporter une source lumineuse 108 configurée pour émettre cette lumière incidente 107 et illuminer la face d'entrée 106. De manière avantageuse, cette source lumineuse 108 est configurée pour émettre une lumière 107 conforme au spectre solaire AM 1.5 et/ou avec une puissance comprise entre 200 W/m² et 2000 W/m² (par exemple égale à 1000 W/m²). Selon un exemple de réalisation, la source lumineuse 108 correspond à une ou plusieurs lampes à Xénon couplée(s) à au moins un filtre (par exemple pour former un simulateur solaire de classe AAA).

Le dispositif 104 comporte en outre, comme cela est visible sur la figure 3, un polariseur 110, ou premier filtre polarisant, configuré pour polariser la lumière incidente 107 (qui est non polarisée) selon une première direction de polarisation. Sur l'exemple de la figure 3, la première direction de polarisation est par exemple parallèle à l'axe X visible sur cette figure. En variante, la première direction de polarisation pourrait être par exemple parallèle à l'axe Y visible sur la figure 3.

Le dispositif 104 comporte en outre un élément matriciel de polarisation 112 configuré pour recevoir la lumière polarisée selon la première direction de polarisation (portant la référence 109 sur la figure 3), c'est-à-dire la lumière ayant traversé le polariseur 110, et modifier, en fonction d'un signal de commande représentatif d'un motif de l'ombre destinée à être projetée, la direction de polarisation de la lumière incidente sortant de différentes régions de l'élément matriciel de polarisation 112 indépendamment les unes des autres, et ainsi modifier l'angle de polarisation de la lumière 107 reçue.

De manière avantageuse, cet élément matriciel de polarisation 112 comporte une couche de cristaux liquides couplée à une matrice électronique de commande, par exemple une matrice active de transistors, par exemple de type TFT, ou une matrice passive formée d'une grille de fils conducteurs, commandant la polarisation appliquée pour chacune des régions de l'élément matriciel de polarisation 112. Dans ce cas, l'élément matriciel de polarisation 112 peut correspondre à une matrice, ou dalle, LCD (« Liquid Crystal Display » en anglais) telle que celles utilisées dans les écrans LCD. une couche de cristaux liquides à laquelle est ajoutée une matrice de transistors TFT qui font tourner l'angle de polarisation en fonction de la tension appliquée par la matrice de transistors.

L'élément matriciel de polarisation 112 comporte une multitude de régions pour chacune desquelles l'orientation des cristaux liquides peut être définie en fonction du signal électrique qui leur est appliqué par la matrice électronique de commande (non visible sur les figures). Chacune de ces régions va correspondre à un pixel d'une image lumineuse incluant l'ombre destinée à être projetée sur le panneau photovoltaïque 200. De manière avantageuse, les cristaux liquides de l'élément matriciel de polarisation 112 présentent la plus grande transmittance native possible. La résolution de l'élément matriciel de polarisation 112, c'est-à-dire la taille et le nombre des différentes régions de l'élément matriciel de polarisation 112, détermine la résolution spatiale de l'ombre projetée sur le panneau 200.

Le dispositif 104 comporte en outre un analyseur 114, ou deuxième filtre polarisant, configuré pour recevoir la lumière polarisée par l'élément matriciel de polarisation 112 (la lumière obtenue en sortie de l'élément matriciel de polarisation 112 porte la référence 111 sur la figure 3) et la filtrer selon une deuxième direction de polarisation perpendiculaire à la première direction de polarisation. Sur l'exemple de la figure 3, la deuxième direction de polarisation est par exemple parallèle à l'axe Y visible sur cette figure. Le dispositif 104 délivre, sur une face de sortie 116 disposée du côté du panneau photovoltaïque 200, l'image lumineuse 113 incluant l'ombre projetée sur le panneau photovoltaïque 200.

Un exemple d'image lumineuse 113 projetée sur le panneau photovoltaïque est visible sur la figure 1. Dans cet exemple, l'image 113 comporte des parties lumineuses 115 et des parties opaques 117 formant l'ombre projetée sur le panneau 200. Les parties lumineuses 115 sont formées par les faisceaux lumineux ayant traversé les régions, ou pixels, de l'élément matriciel de polarisation 112 ayant modifié l'angle de polarisation de la lumière, et les parties opaques 117 sont formées par les faisceaux lumineux ayant traversé les régions, ou pixels, de l'élément matériel de polarisation 112 n'ayant pas modifié l'angle de polarisation de la lumière.

Ainsi, l'intensité lumineuse de chaque pixel de l'image lumineuse obtenue en sortie de la face 116 est modulée par la modification de polarisation réalisée (ou non) par l'élément matriciel de polarisation 112 au niveau chacune des régions de cet élément 112 correspondant à chacun de ces pixels. Lorsque, pour une de ces régions, l'élément matriciel de polarisation 112 ne modifie pas la polarisation de la lumière reçue au niveau de cette région, l'intensité lumineuse obtenue en sortie est nulle ou très faible car la lumière polarisée selon la première direction de polarisation est stoppée par l'analyseur 114. Par contre, lorsque l'élément matriciel de polarisation 112 modifie la polarisation de la lumière précédemment polarisée selon la première direction de polarisation de manière à ce que cette lumière devienne polarisée selon la deuxième direction de polarisation, cette lumière est alors intégralement ou quasiment intégralement transmise à travers l'analyseur 114. Entre ces deux extrêmes dont les valeurs correspondent au contraste obtenu, l'intensité lumineuse de chaque pixel de l'image obtenue sur la face de sortie 116 peut être modulée suivant que la direction de polarisation modifiée par l'élément matriciel de polarisation 112 soit plus ou moins proche de l'une des première et deuxième directions de polarisations, et moduler ainsi l'intensité de l'ombrage simulé. Cela a pour effet de contrôler spatialement l'intensité lumineuse au niveau de chaque pixel de l'image lumineuse obtenue sur la face de sortie 116.

Sur la figure 3, pour une meilleure compréhension, le polariseur 110, l'élément matriciel de polarisation 112 et l'analyseur 114 sont représentés comme étant espacés les uns des autres. En réalité, ces éléments sont disposés les uns contre les autres, avec d'éventuelles couches intermédiaires au moins partiellement transparentes disposées entre elles. Dans une configuration particulière, le dispositif 104 peut comporter également une matrice de filtres colorés disposée par exemple entre l'élément matriciel de polarisation 112 et l'analyseur 114, ce qui permet par exemple de projeter sur le panneau 200 une image lumineuse d'une ou plusieurs couleurs particulières. Cela peut être avantageux lorsque le panneau 200 comporte des cellules photovoltaïques sensibles à la longueur d'onde de la lumière reçue, comme c'est par exemple le cas des cellules tandem. Il est également envisageable de réaliser des tests d'ombrage sur une seule couleur afin de maximiser l'absorption du panneau photovoltaïque, étant donné que certaines longueurs d'onde peuvent être mieux converties en électrons que d'autres.

Le dispositif 104 comporte en outre un dispositif électronique de commande 118 couplé électriquement à l'élément matriciel de polarisation 112 et configuré pour envoyer un signal de commande, représentatif d'un motif de l'ombre destinée à être projetée, à l'élément matriciel de polarisation 112. Sur l'exemple de la figure 1, le dispositif électronique de commande 118 comporte un ordinateur 120, ou plus généralement une unité de calcul, couplé à une carte vidéo 122 par une connexion 123 par exemple de type VGA (« Video Graphics Array » en anglais) ou HDMI (« High-Definition Multimedia Interface » an anglais, ou Interface Multimédia Haute Définition). La carte vidéo 122 transforme le flux de données vidéo transmis depuis l'ordinateur 120 en signaux d'affichage compatibles avec l'élément matriciel de polarisation 112. Les motifs d'ombre à projetés sur le panneau 200 peuvent être générés par un logiciel installé sur l'ordinateur 120.

Sur cet exemple, le dispositif électronique de commande 118 comporte également un carte d'interface 124 de type T-CON (« Time Controller » en anglais) munie de sorties couplées électriquement à des entrées de la matrice électronique de commande de l'élément matriciel de polarisation 112, et comprenant au moins une entrée couplée à la carte vidéo 122 par exemple par une connexion 125 de type LVDS (« Low Voltage Differential Signaling » en anglais, ou transmission différentielle basse tension). Cette carte d'interface 124 reçoit les données d'affichage et permet de séparer les signaux et d'effectuer le balayage des différentes régions, ou pixels, selon la résolution native de l'élément matriciel de polarisation 112.

Dans une configuration avantageuse, le polariseur 110, l'élément matriciel de polarisation 112 et l'analyseur 114 sont configurés pour polariser la lumière dans l'ensemble d'une gamme de longueurs d'onde comprises entre 400 nm et 1100 nm, ce qui permet au dispositif 104 de transmettre au panneau 200 les longueurs d'onde du domaine visible ainsi qu'une partie des longueurs d'onde du domaine infrarouge. Dans cette configuration, le polariseur 110 et l'analyseur 114 peuvent être de type à grille métallique.

Le dispositif 100 comporte en outre un dispositif de mesure courant - tension 126 configuré pour mesurer la caractéristique courant - tension (mesure I-V) du panneau photovoltaïque 200, notamment lorsque l'ombrage est simulé sur le panneau photovoltaïque 200. Le dispositif 126 correspond par exemple à une unité de source et de mesures (ou SMU pour « Source Measure Unit » en anglais) générant un balayage de tension aux bornes du panneau photovoltaïque 200 dans un intervalle compris entre 0 V et Voc (tension en circuit ouvert) et mesurant le courant du panneau photovoltaïque 200 en fonction de la tension appliquée. La caractéristique courant-tension du panneau photovoltaïque 200 peut alors être tracée, ce qui permet de calculer les différentes propriétés intrinsèques du panneau photovoltaïque 200 comme par exemple sa résistance série / parallèle, le Voc, Isc (courant court-circuit), le Fill Factor (Facteur de Forme), etc. Le dispositif 126 peut être piloté par un programme informatique sur un ordinateur relié par un câble de communication. Le programme peut lancer la mesure courant-tension de manière continue ou à un intervalle de temps régulier. Cette mesure peut être traitée en temps réel par un programme afin d'en extraire les différents paramètres intrinsèques du panneau photovoltaïque 200 en fonction du taux d'ombrage. Les motifs d'ombre projetés sur le panneau photovoltaïque 200 peuvent être statiques, c'est-à-dire correspondre à des images fixes telles que les cellules photovoltaïques du panneau 200 se trouvant dans l'ombre de l'image projetée ne changent pas, ou être dynamiques, c'est-à-dire tels que l'ombre projetée sur le panneau photovoltaïque 200 change. Ces changements peuvent correspondre à un déplacement de l'ombre et/ou une modification de la forme de l'ombre et/ou une modification de l'opacité de l'ombre simulée. Dans le cas de motifs d'ombre projetés de manière dynamique, le dispositif 104 est configuré pour que le taux de rafraîchissement atteignable soit compatible avec l'évolution souhaitée pour les changements de motifs d'ombre. Les motifs d'ombre peuvent être générés aléatoirement ou non.

Dans une configuration avantageuse, les dimensions de la face de sortie 116 du dispositif 104 sont supérieures ou égale à celles du panneau photovoltaïque 200 afin que le motif d'ombrage simulé par le dispositif 100 soit projeté sur toutes les cellules photovoltaïque du panneau 200. En effet, étant donné que le dispositif 104 a une absorption native, il est avantageux que le dispositif 104 soit plus grand que la taille du panneau photovoltaïque 200 à caractériser afin d'avoir une homogénéité spatiale du flux incident sur toute la surface du panneau photovoltaïque 200 en mode transmission complète. Il est également envisageable que les dimensions de la face de sortie 116 du dispositif 104 sont supérieures ou égale à celles de plusieurs panneaux photovoltaïques 200 disposés les uns à côté des autres.

Il est également envisageable d'utiliser un dispositif 100 dont les dimensions de la face de sortie 116 du dispositif 104 sont inférieures à celles du panneau photovoltaïque 200, le motif d'ombrage simulé par le dispositif 100 étant dans ce cas projeté sur une partie seulement des cellules photovoltaïque du panneau photovoltaïque 200. Dans ce cas, des diodes de type « bypass » ou des interconnexions adaptées peuvent par exemple être couplées au panneau photovoltaïque 200 afin de gérer l'inhomogénéité de flux lumineux reçu à la surface du panneau photovoltaïque 200.

Dans une autre configuration, le dispositif 100 peut comporter plusieurs dispositifs 104 chacun destiné à projeter une image lumineuse incluant une ombre sur un panneau photovoltaïque 200 associé, ou chacun destiné à projeter une image lumineuse incluant une ombre sur une partie d'un même panneau photovoltaïque 200.

Dans une configuration particulière, le dispositif 100 peut comporter en outre un dispositif de mesure de température du dispositif 104 permettant de vérifier son intégrité lors de l'utilisation du dispositif 100.

Dans une configuration particulière, lorsque le panneau photovoltaïque 200 à caractériser est de forme courbe, le dispositif 104 peut présenter une courbure similaire à celle du panneau photovoltaïque 200.

Pour caractériser le panneau photovoltaïque 200, les étapes suivantes peuvent être mises en oeuvre :
- disposer le panneau photovoltaïque 200 sur le support 102 du dispositif de simulation d'ombrage 100;
- projeter dynamiquement ou statiquement une image lumineuse incluant une ombre depuis le dispositif de projection d'ombre 104 du dispositif de simulation d'ombrage 100 sur le panneau photovoltaïque 200 ;
- mesurer la caractéristique courant-tension du panneau photovoltaïque 200 par le dispositif de mesure courant - tension 126 du dispositif de simulation d'ombrage 100, simultanément à la projection de l'image lumineuse sur le panneau photovoltaïque 200.

## Revendications

1. Dispositif de simulation d'ombrage (100) sur au moins un panneau photovoltaïque (200), comprenant au moins :
- un premier support (102) configuré pour supporter le panneau photovoltaïque (200) ;
- un dispositif de projection d'ombre (104) configuré pour être disposé en regard du panneau photovoltaïque (200), comprenant au moins :
∘ une face d'entrée (106) destinée à recevoir une lumière incidente (107) ;
∘ un polariseur (110) configuré pour polariser la lumière incidente (107) selon une première direction de polarisation ;
∘ un élément matriciel de polarisation (112) configuré pour recevoir la lumière incidente polarisée selon la première direction de polarisation (109) et modifier, en fonction d'un signal de commande représentatif d'un motif de l'ombre destinée à être projetée, la direction de polarisation de la lumière sortant de différentes régions de l'élément matriciel de polarisation (112) indépendamment les unes des autres;
∘ un analyseur (114) configuré pour recevoir la lumière (111) sortant des différentes régions de l'élément matriciel de polarisation (112) et la filtrer selon une deuxième direction de polarisation perpendiculaire à la première direction de polarisation, de manière à délivrer, sur une face de sortie (116) destinée à être disposée en regard du panneau photovoltaïque (200), une image lumineuse (113) incluant l'ombre destinée à être projetée ;
∘ un dispositif électronique de commande (118) couplé électriquement à l'élément matriciel de polarisation (112) et configuré pour générer et envoyer le signal de commande à l'élément matriciel de polarisation (112),
∘ dans lequel le polariseur (110), l'élément matriciel de polarisation (112) et l'analyseur (114) sont configurés pour polariser la lumière dans l'ensemble d'une gamme de longueurs d'onde comprises entre 400 nm et 1100 nm.

2. Dispositif de simulation d'ombrage (100) selon la revendication 1, dans lequel l'élément matriciel de polarisation (112) comporte une couche de cristaux liquides couplée à une matrice électronique de commande.

3. Dispositif de simulation d'ombrage (100) selon la revendication 2, dans lequel la matrice électronique de commande correspond à une matrice active de transistors.

4. Dispositif de simulation d'ombrage (100) selon l'une des revendications 1 à 3, dans lequel le polariseur (110) et l'analyseur (114) sont de type à grille métallique.

5. Dispositif de simulation d'ombrage (100) selon l'une des revendications précédentes, comportant en outre une source lumineuse (108) configurée pour illuminer la face d'entrée (106) du dispositif de projection d'ombre (104).

6. Dispositif de simulation d'ombrage (100) selon la revendication 5, dans lequel la source lumineuse (108) est configurée pour émettre une lumière conforme au spectre solaire AM 1.5 et/ou avec une puissance comprise entre 200 W/m² et 2000 W/m².

7. Dispositif de simulation d'ombrage (100) selon l'une des revendications précédentes, comportant en outre un deuxième support configuré pour supporter le dispositif de projection d'ombre (104).

8. Dispositif de simulation d'ombrage (100) selon la revendication 7, dans lequel le premier support (102) et le deuxième support sont configurés tels que la distance entre eux soit ajustable.

9. Dispositif de simulation d'ombrage (100) selon l'une des revendications précédentes, comportant en outre un dispositif de mesure courant - tension (126) configuré pour mesurer la caractéristique courant - tension du panneau photovoltaïque (200).

10. Procédé de caractérisation d'au moins un panneau photovoltaïque (200), comportant au moins les étapes suivantes :
- disposer le panneau photovoltaïque (200) sur le premier support (102) d'un dispositif de simulation d'ombrage (100) selon la revendication 10 ;
- projection dynamique ou statique d'une image lumineuse (113) incluant une ombre depuis le dispositif de projection d'ombre (104) du dispositif de simulation d'ombrage (100) sur le panneau photovoltaïque (200) ;
- mesure de la caractéristique courant-tension du panneau photovoltaïque (200) par le dispositif de mesure courant - tension (126) du dispositif de simulation d'ombrage (100), simultanément à la projection de l'image lumineuse (113) sur le panneau photovoltaïque (200).

11. Procédé selon la revendication 10, dans lequel, lors de la projection de l'image lumineuse (113) sur le panneau photovoltaïque (200), une distance entre le panneau photovoltaïque (200) et la face de sortie (116) du dispositif de projection d'ombre (104) du dispositif de simulation d'ombrage (100) est comprise entre 1 cm et 10 cm.
